# EUROPÄISCHE PATENTANMELDUNG

(11) **EP 1 688 628 A1**
(43) Veröffentlichungstag der Anmeldung: **09.08.2006**
(21) Anmeldenummer: 06450018.4
(22) Anmeldetag: 02.02.2006
(51) Int. Cl.: F16B 25/10, F16B 13/02

(54) **Schraubspreizdübel**

(30) Priorität: 04.02.2005 AT 2152005
(71) Anmelder: Hartl, Günther, 4212 Neumarkt (AT)
(72) Erfinder: Hartl, Günther, 4212 Neumarkt (AT)
(74) Vertreter: Babeluk, Michael

(57) **Zusammenfassung**

Die Erfindung betrifft einen Schraubspreizdübel (1) mit einer Spreizschraube (2) mit einem Schraubenkopf (4) und einem mit einem Außengewinde (6) versehenen Schraubenschaft (7), wobei an dem dem Schraubenkopf (4) abgewandten Ende der Spreizschraube (2) ein mit dieser drehfest verbundener Bohrkopf (8) angeordnet ist und der Schraubenschaft (7) von einer Spreizhülse (3) umschlossen ist, und wobei die Spreizhülse (3) an ihrer äußeren Mantelfläche zumindest eine von einer schraubenförmigen Förderschnecke (12) begrenzte Fördernut (13) aufweist. Um die Funktionssicherheit des Schraubspreizdübels (1) zu verbessern, ist vorgesehen, dass der größte Durchmesser (d) der Spreizhülse (3) kleiner ist, als der Bohrdurchmesser (D) des Bohrkopfes (8).

## Beschreibung

Die Erfindung betrifft einen Schraubspreizdübel mit einer Spreizschraube mit einem Schraubenkopf und einem mit einem Außengewinde versehenen Schraubenschaft, wobei an dem dem Schraubenkopf abgewandten Ende der Spreizschraube ein mit dieser drehfest verbundener Bohrkopf angeordnet ist und der Schraubenschaft von einer Spreizhülse umschlossen ist, und wobei die Spreizhülse an ihrer äußeren Mantelfläche zumindest eine von einer schraubenförmigen Förderschnecke begrenzte Fördernut aufweist.

Zum Befestigen von Gegenständen, wie beispielsweise Kabelkanälen an einer Wand, sind im Allgemeinen mehrere Arbeitsschritte notwendig. In einem ersten Schritt wird eine Bohrung in die Wand eingearbeitet, in die anschließend ein Dübel eingesetzt wird. In einem weiteren Schritt wird der Gegenstand mittel einer Schraube befestigt.

Aus der DE 20 2004 015 501 U1 ist ein Schraubspreizdübel der eingangs genannten Art bekannt. Der Schaft der Spreizschraube ist mit einem Bohrkopf fest verschraubt und von einer Spreizhülse umgeben. Der Bohrkopf ermöglicht es, in einem Arbeitsgang das Bohren des Loches, das Setzen des Dübels und das Einschrauben der Spreizschraube durchzuführen. Dabei wird der Bohrkopf über ein am Schraubenkopf angreifendes Werkzeug angetrieben und in den Grundkörper, beispielsweise eine Wand, eingearbeitet, bis die Spreizhülse im Bohrloch versenkt ist und durch Wechselwirkung mit dem umgebenden Material an einer Drehung gehindert wird. Durch weiteres Drehen der Befestigungsschraube kommt es zu einer Spreizung und einem Verspannen der Spreizhülse, bis die Befestigungsschraube fest im Loch verankert ist. Die Spreizhülse weist an ihrer Außenseite spiralförmige Erhebungen auf, welche in das umgebende Material eingearbeitet werden, um eine drehfeste Verankerung der Spreizhülse in der Wand zu bewirken. Die Erhebungen weisen dabei zumindest teilweise einen Durchmesser auf, welcher größer ist als der Durchmesser des Bohrkopfes. Dies hat allerdings den Nachteil, dass der Austrag des Bohrmaterials aus dem Bohrloch behindert wird, und dass es - insbesondere bei sehr hartem Wandmaterial - zu einem vorzeitigen Festfressen der Spreizhülse im Bohrloch kommen kann, auch wenn der Spreizschraubdübel erst teilweise in die Wand eingedreht ist. Dies führt zu einem vorzeitigen Spreizen des Dübels noch vor Erreichen der maximalen Bohrtiefe, wodurch große Teile des Schraubspreizdübels aus dem Bohrloch herausragen. Der zur Befestigung von Gegenständen ungeeignete Schraubspreizdübel muss wieder zeit- und arbeitsaufwändig entfernt werden.

Aufgabe der Erfindung ist es, diese Nachteile zu vermeiden und die Funktionssicherheit des Schraubspreizdübels zu erhöhen.

Erfindungsgemäß wird dies dadurch erreicht, dass der größte Durchmesser der Spreizhülse kleiner ist, als der Bohrdurchmesser des Bohrkopfes, wobei vorzugsweise der größte Durchmesser der Spreizhülse maximal 98%, vorzugsweise maximal 95% des Bohrdurchmessers des Bohrkopfes entspricht.

Dadurch, dass der größte Durchmesser Spreizhülse in dem Längsbereich, über welchen sich die schraubenförmige Fördernut erstreckt, kleiner ist als der Bohrdurchmesser des Bohrkopfes, wird der Austrag des Bohrmaterials aus dem Bohrloch nicht behindert und ein frühzeitiges Verklemmen der Spreizhülse im Bohrloch vermieden. Vorzugsweise ist vorgesehen, dass die Tiefe der Fördernut und/ oder der Abstand der schraubenförmigen Förderschnecke von der Drehachse des Schraubspreizdübels zwischen Bohrkopf und Halteeinrichtung konstant ist. Die Tiefe der Fördernut sollte zumindest 10%, vorzugsweise 30% des Bohrdurchmessers betragen.

Um ein sicheres Verankern der Befestigungsschraube im Bohrloch zu ermöglichen, ist vorgesehen, dass die Spreizhülse an dem dem Schraubenkopf zugewandten Ende zumindest eine Halteeinrichtung aufweist. Vorzugsweise ist dabei vorgesehen, dass die Halteeinrichtung Krallen, Rippen oder dergleichen aufweist, welche vorzugsweise an der dem Schraubenkopf abgewandten Seite eines vorzugsweise scheibenförmigen Halteringes der Spreizhülse angeordnet sind. Die Halteeinrichtung der Spreizhülse ist in einem direkt an den Schraubenkopf angrenzenden Bereich am Ende der schraubenförmigen Fördernut vorgesehen. Die Drehung der Spreizhülse wird somit erst dann blockiert, wenn die Spreizhülse komplett im Bohrloch eingearbeitet ist. Die Drehsicherung der Spreizhülse wird durch die Krallen oder Rippen erreicht, welche in das Material der Wand eingreifen. Die Halteeinrichtung löst sich nach dem vollständigen Eindringen der Befestigungsschraube von diesen Rippen in Richtung Schraubenkopf.

Vorzugsweise ist vorgesehen, dass die Spreizhülse aus Kunststoff gebildet ist. Vorzugsweise wird dabei die Spreizhülse auf die Spreizschraube aufgespritzt. Zur Vereinfachung der Fertigung ist es vorteilhaft, wenn der Bohrkopf einstückig mit der Spreizschraube ausgebildet ist.

Alternativ dazu kann die Spreizhülse aus Metall bestehen. In diesem Fall ist es vorteilhaft, wenn das Innengewinde, in welches die Spreizschraube eingreift, durch eine separate Mutter gebildet ist. Der Bohrkopf kann in diesem Fall als von der Spreizschraube getrennter Teil ausgebildet sein und beispielsweise mit der Spreizschraube verschraubt werden, nachdem Spreizhülse und Mutter auf die Spreizschraube aufgesteckt sind.

Um ein leichtes Verspannen, bzw. Verknoten der Spreizhülse im Bohrloch zu ermöglichen, ist es vorteilhaft, wenn die Spreizhülse Längsschlitze aufweist.

Die Erfindung wird im Folgenden anhand der Figuren näher erläutert. Es zeigen:
- Fig. 1: eine Spreizschraube des erfindungsgemäßen Spreizschraubendübels;
- Fig. 2: eine Spreizhülse des erfindungsgemäßen Spreizschraubendübels;
- Fig. 3: den Spreizschraubendübel im ungespreizten Zustand; und
- Fig. 4: den Spreizschraubendübel im gespreizten Zustand.

Der Spreizschraubendübel 1 weist eine Spreizschraube 2 auf, welche von einer Spreizhülse 3 umgeben ist.

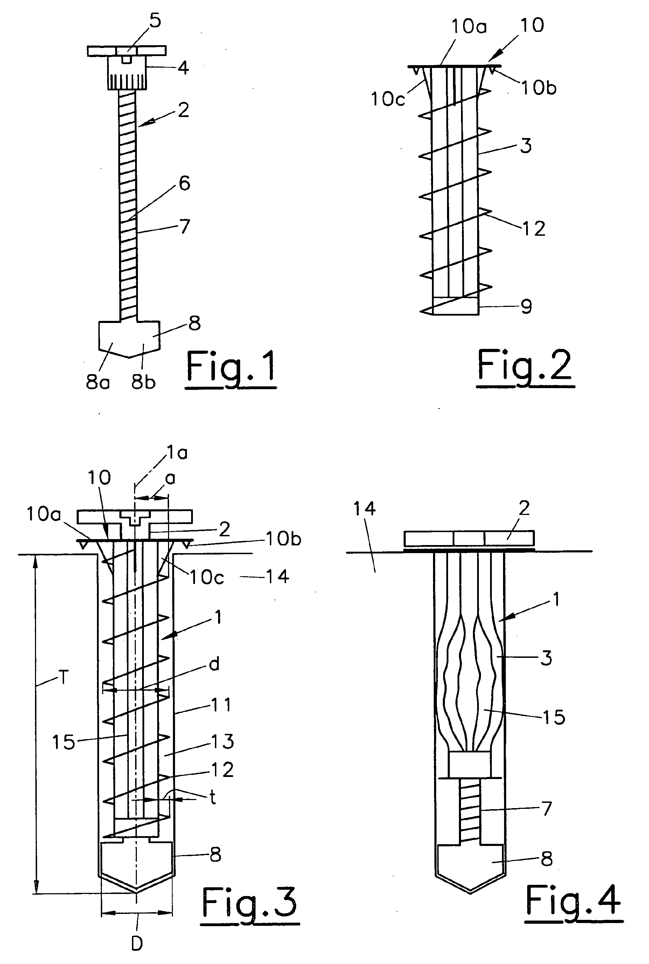

Die in Fig. 1 dargestellten Spreizschraube 2 besteht aus einem Schraubenkopf 4 mit einer Werkzeugangriffsmöglichkeit 5 und einem ein Außengewinde 6 aufweisenden Schaft 7. Die Spreizschraube 2 kann als Senkkopf-, Zylinderkopf-, Linsenkopf-, Flachrundkopfschraube oder dergleichen ausgebildet sein. Die Werkzeugangriffsmöglichkeit 5 kann beispielsweise durch einen eingeformten Schlitz, einen Kreuzschlitz, Imbus, Torx oder dergleichen gebildet sind. An dem, dem Schraubenkopf 4 gegenüberliegenden Ende des Schraubenschaftes 7 ist ein Bohrkopf 8 drehfest mit dem Schraubenschaft 7 verbunden. Der Bohrkopf 8 kann einstückig mit dem Schraubenschaft 7 ausgebildet sein. Im Ausführungsbeispiel weist der Bohrkopf 8 zwei oder mehr Flügel 8a, 8b auf. Die Flügel 8a, 8b sind entsprechend geschliffen und gehärtet, um ein Schneiden, bzw. Schlagbohren zu ermöglichen. Die Spreizschraube 2 ist von einer Spreizhülse 3 umschlossen, welche separat in Fig. 2 dargestellt ist. Die Spreizhülse 3 kann aus Kunststoff bestehen. In diesem Fall wird die Spreizhülse 3 durch Umspritzen der Spreizschraube 2 hergestellt. Der Bohrkopf 8 kann dabei einstückig mit dem Schraubenschaft 7 ausgebildet sein. Im Falle einer aus Kunststoff bestehenden Spreizhülse 3 wird vorteilhafter Weise als Außengewinde 6 ein Spax-Gewinde verwendet. In die Spreizhülse 3 ist das Gegenstück zum Spax-Gewinde eingearbeitet, wobei an der Stelle des Spax-Gewindes der Kunststoff verstärkt sein kann.

Alternativ dazu kann die Spreizhülse 3 auch aus Metall bestehen. In diesem Falle weist ein dem Bohrkopf 8 zugewandter Bereich 9 der Spreizhülse 3 ein Innengewinde auf, welches in das Außengewinde 6 des Schraubenschaftes 7 eingreift. Bevorzugt wird dabei ein metrisches Gewinde eingesetzt. Alternativ zu einem in die Spreizhülse 3 eingearbeiteten Innengewinde kann auch eine separate Mutter verwendet werden.

Um ein Verrutschen der Spreizhülse 3 bei der Befestigung zu vermeiden, weist die Spreizhülse 3 an dem dem Schraubenkopf 4 zugewandten Ende zumindest eine Halteeinrichtung 10 auf. Die Halteeinrichtung 10 besteht aus einem scheibenförmigen Haltering 10a, an dessen Unterseite Haltekrallen 10b und Rippen 10c vorgesehen sind. Der Haltering 10a löst sich nach dem vollständigen Eindringen der Befestigungsschraube 1 in das Bohrloch 11 von diesen Rippen 10c in Richtung des Schraubenkopfes 4.

Die Spreizhülse 3 weist an ihrer Außenseite eine schraubenförmige Förderschnecke 12 für das Bohrmaterial auf, wobei zwischen den Schraubengängen der Förderschnecke 12 eine Fördernut 13 ausgebildet ist. Ein unbehinderter Abtransport des Bohrmaterials aus dem Bohrloch 11 ist Voraussetzung, um ein vorzeitiges Verklemmen der Spreizhülse 3 im Bohrloch 11 zu vermeiden. Dazu ist es wesentlich, dass der maximale Durchmesser d der Spreizhülse 3 zwischen der Halteeinrichtung 10 und dem Bohrkopf 8, also in dem Bereich der Förderschnecke 12 und der Fördernut 13, geringer ist als der Bohrdurchmesser D des Bohrkopfes 8. Vorzugsweise beträgt der Durchmesser d maximal 98% des Bohrdurchmessers D. Der Abstand a der Förderschnecke 12 von der Drehachse 1a und die Tiefe t der Fördernut 13 sind über ihre gesamte Länge konstant.

Um eine ausreichende Ausbringung des Bohrmaterials zu gewährleisten, sollte die Tiefe t der Fördernut 13 etwa 10% bis 30% des Bohrdurchmessers D betragen.

Die Befestigungsschraube 1 eignet sich besonders gut zur Montage von Gegenständen, beispielsweise von Kabelkanälen, Konsolen, Faserdämmplatten oder dergleichen, an einer Wand 14. Die Arbeitsschritte bei der Montage können dabei auf ein Minimum reduziert werden. Zur Befestigung beispielsweise eines Kabelkanals an einer Wand 14 wird dieser an der Wand 14 angelegt, die Befestigungsschraube 1 durch die Befestigungsbohrungen des Kabelkanals mit dem Bohrkopf 8 an der Wand 14 angesetzt und mit Hilfe beispielsweise einer Bohrmaschine oder eines anderen geeigneten Werkzeuges in die Wand 14 eingebracht. Durch den Bohrkopf 8 wird das Bohrloch 11 gebohrt, während das Bohrmaterial über die Förderschnecke 12 ausgeworfen wird. Erst bei Erreichen der maximalen Bohrtiefe T greift die Halteeinrichtung 10 an der Wand 14 an und blockiert die Drehbewegung der Spreizhülse 3. Durch das Innengewinde im Gewindebereich 9, bzw. eine in diesem Bereich angeordnete separate Mutter kommt es zu einem Stauchen der Spreizhülse 3, wobei sich diese im Bohrloch 11 verspannt, wie in Fig. 4 dargestellt ist. Um ein Verknoten der Spreizhülse 3 zu ermöglichen, weist diese Längsschlitze 15 zwischen dem Gewindebereich 9 und dem Haltebereich 10 auf.

Die Befestigung von Gegenständen an einer Wand 14 kann somit in einem einzigen Arbeitsgang erfolgen.

## Patentansprüche

1. Schraubspreizdübel (1) mit einer Spreizschraube (2) mit einem Schraubenkopf (4) und einem mit einem Außengewinde (6) versehenen Schraubenschaft (7), wobei an dem dem Schraubenkopf (4) abgewandten Ende der Spreizschraube (2) ein mit dieser drehfest verbundener Bohrkopf (8) angeordnet ist und der Schraubenschaft (7) von einer Spreizhülse (3) umschlossen ist, und wobei die Spreizhülse (3) an ihrer äußeren Mantelfläche zumindest eine von einer schraubenförmigen Förderschnecke (12) begrenzte Fördernut (13) aufweist, **dadurch gekennzeichnet, dass** der größte Durchmesser (d) der Spreizhülse (3) kleiner ist, als der Bohrdurchmesser (D) des Bohrkopfes (8).

2. Schraubspreizdübel (1) nach Anspruch 1, **dadurch gekennzeichnet, dass** der größte Durchmesser (d) der Spreizhülse (3) maximal 98%, vorzugsweise maximal 95% des Bohrdurchmessers (D) des Bohrkopfes (8) entspricht.

3. Schraubspreizdübel (1) nach Anspruch 1 oder 2, **dadurch gekennzeichnet, dass** die Spreizhülse (3) an dem dem Schraubenkopf (4) zugewandten Ende zumindest eine Halteeinrichtung (10) aufweist.

4. Schraubspreizdübel (1) nach Anspruch 3, **dadurch gekennzeichnet, dass** die Halteeinrichtung (10) Krallen (10b), Rippen (10c) oder dergleichen aufweist, welche vorzugsweise an der dem Schraubenkopf (4) abgewandten Seite eines vorzugsweise scheibenförmigen Halteringes (10a) der Spreizhülse (3) angeordnet sind.

5. Schraubspreizdübel (1) nach einem der Ansprüche 1 bis 4, **dadurch gekennzeichnet, dass** die Spreizhülse (3) aus Kunststoff besteht, wobei vorzugsweise die Spreizhülse (3) durch Umspritzen der Spreizschraube (2) gefertigt ist.

6. Schraubspreizdübel (1) nach einem der Ansprüche 1 bis 4, **dadurch gekennzeichnet, dass** die Spreizhülse (3) aus Metall besteht.

7. Schraubspreizdübel (1) nach einem der Ansprüche 1 bis 6, **dadurch gekennzeichnet, dass** der Bohrkopf (8) einstückig mit der Spreizschraube (2) ausgebildet ist.

8. Schraubspreizdübel (1) nach einem der Ansprüche 1 bis 7, **dadurch gekennzeichnet, dass** die Spreizhülse (3) im Bereich des dem Bohrkopf (8) zugewandten Endes der Spreizhülse (3) ein Innengewinde aufweist, in welches die Spreizschraube (2) eingreift.

9. Schraubspreizdübel (1) nach Anspruch 8, **dadurch gekennzeichnet, dass** das Innengewinde durch eine separate Mutter gebildet ist.

10. Schraubspreizdübel (1) nach einem der Ansprüche 1 bis 9, **dadurch gekennzeichnet, dass** der Bohrkopf (8) zumindest zwei Flügel (8a, 8b) aufweist.

11. Schraubspreizdübel (1) nach einem der Ansprüche 1 bis 10, **dadurch gekennzeichnet, dass** Tiefe (t) der Fördernut (13) zumindest etwa 10%, vorzugsweise zumindest 30% des Bohrdurchmessers (D) beträgt.

12. Schraubspreizdübel (1) nach einem der Ansprüche 1 bis 11, **dadurch gekennzeichnet, dass** die Tiefe (t) der Fördernut (13) und/oder der Abstand (a) der schraubenförmigen Förderschnecke (12) von der Drehachse (1a) des Schraubspreizdübels (1) zwischen Bohrkopf (8) und Halteeinrichtung (10) im wesentlichen konstant ist.

13. Schraubspreizdübel (1) nach einem der Ansprüche 1 bis 12, **dadurch gekennzeichnet, dass** die Spreizhülse (3) zumindest in einem von ihren Enden beabstandeten Bereich Längsschlitze (15) aufweist.
